# EUROPÄISCHE PATENTANMELDUNG

(11) **EP 1 167 273 A1**
(43) Veröffentlichungstag der Anmeldung: **02.01.2002**
(21) Anmeldenummer: 01250218.3
(22) Anmeldetag: 15.06.2001
(51) Int. Cl.: B66C 9/18, B61H 7/06, B60T 7/22

(54) **Bremseinrichtung für einen auf Schienen verfahrbaren Laufkran**

(30) Priorität: 19.06.2000 DE 10029889
(71) Anmelder: Atecs Mannesmann AG, 40213 Düsseldorf (DE)
(72) Erfinder: Breifeld, Jürgen, Dipl.,-Ing., 58300 Wetter (DE); Franzen, Hermann, Dipl.,-Ing., 41238 Mönchengladbach (DE); Moutsokapas, Janis, Dipl.,-Ing., 40789 Monheim (DE)
(74) Vertreter: Meissner, Peter E., Dipl.-Ing.

(57) **Zusammenfassung**

Die Erfindung betrifft eine Bremseinrichtung zur Begrenzung des Fahrweges eines auf Schienen verfahrbaren Laufkranes durch zeitweise Erhöhung dessen Fahrwiderstandes bis zum Stillstand. Dabei besteht die Bremseinrichtung aus mindestens einem am Laufkran (1) angeordneten, mit bis zur Höhe der Laufkrangewichtskraft gegen die Schienen (3) preßbaren Bremsschuh (11), der aus einer von der Schiene (3) beabstandeten Ruhestellung kraftbetätigt in eine Bremsstellung bewegbar ist, in der der Bremsschuh bzw. die Bremsschuhe (11) mit einer der Schiene (3) zugewandten Seite gegen die Schiene (3) preßbar ist bzw. sind.

## Beschreibung

Die Erfindung betrifft eine Bremseinrichtung zur Begrenzung des Fahrweges eines auf Schienen verfahrbaren Laufkranes durch zeitweises Erhöhen dessen Fahrwiderstandes bis zum Stillstand.

Es ist bekannt, in Kranwerksanlagen den Fahrweg eines auf Schienen verfahrbaren Laufkranes durch Anschläge zu begrenzen, um zu verhindern, dass der Laufkran über das Ende der Kranbahn hinausfährt. An der Kranbrücke oder am Laufkran selbst werden stimseitig Puffer montiert, die bei einem Auflaufstoß gegen die Anschläge die kinetische Energie des Kranes zumindest teilweise vernichten. Als Puffer kommen je nach Bau- und Einsatzart Zellstoff- und Gummipuffer oder bei hohen Fahrgeschwindigkeiten auch Hydraulikpuffer zur Anwendung. Während bis zu Fahrgeschwindigkeiten von etwa v = 4 m/s standardisierte Puffer eingesetzt werden können, finden in höheren Geschwindigkeitsbereichen ausschließlich Hydraulikpuffer Verwendung, die wegen der hohen Herstell- und Instandhaltungskosten nicht sehr wirtschaftlich sind. Außerdem verändern sich Federkennlinien und Hysteresis der Puffer durch Witterungseinflüsse.

Bei Fahrtgeschwindigkeiten von v > 4 m/s oder wenn zwei oder mehr Krane auf ein und derselben Kranbahn fahren, werden die Pufferwege und im Fall der Verwendung von Hydraulikpuffern deren Baulänge immer größer. Abgesehen davon, dass wegen der maximalen möglichen Knicklänge die Abmessungen der Hydraulikpuffer begrenzt sind, hat auch die Länge der Puffer einen entscheidenden Einfluß auf den Arbeitsbereich des Schienenlaufkranes. Durch die Addition der Pufferwege verliert man gewöhnlich im direkten Kontaktbereich der Krane 10 bis 15 % des Arbeitsbereiches. Kürzt man die Hydraulikpuffer, um den Arbeitsbereich zu vergrößern, so ist die zu vernichtende Aufprallenergie so groß, dass heftige Stöße den Kran und insbesondere die anhängende Last gefährden.

Vielfach ist die zu vernichtende Aufprallenergie auch so groß, dass man gezwungen ist, zwei parallel angeordnete Puffer zu verwenden. Da die Anschläge an den Enden der Kranbahn ebenfalls für die entstehenden Pufferkräfte ausgelegt sein müssen, wird auch die Dimensionierung der Kranbahn, d.h. bei aufgeständerten Kranbahnen der Säulen und des Fundamentes beeinflußt.

Die deutsche Patentanmeldung DE-A 22 61 821 schlägt für Kranfahrzeuge zur Umgehung der noch immer überwiegend verwendeten Puffer eine Bremseinrichtung vor, bei der die Kranbrücke nicht mit Puffern gegen Anschläge fährt, sondern bei der sich zusätzlich angebrachte Räder in Bremsschienen aus gummielastischem Material eindrücken und dadurch eine Walkarbeit verrichten, durch die der Kran gleichmäßig verzögert abgebremst wird. Vorzugsweise bestehen die bekannten Bremsschienen aus Gummi.

Abgesehen davon, dass der Verschleiß einer aus Gummi gefertigten Bremsschiene bei überwiegend auch unter Last gebremsten Kranen erheblich ist, ist auch das Anbringen zusätzlicher Bremsschienen neben der Kranfahrbahn aus Platzgründen nicht immer möglich und stellt zudem einen hohen Bauaufwand dar. Hinzu kommt der Aufwand durch zusätzlich vorzusehende, am Fahrwerkrahmen des Kranes angebrachte Räder, die mit den Bremsschienen gepaart und speziell auf die Abmessungen der Bremsschienen abgestimmt sein müssen. Insgesamt ist die bekannte Bremseinrichtung aufwendig und auch nicht sicher genug, um den Laufkran wiederholt bis zum Stillstand abzubremsen.

Die vorliegende Erfindung hat sich zur Aufgabe gestellt, einen auf Schienen verfahrbaren Laufkran zeitweise durch Erhöhung des Fahrwiderstandes bis zum Stillstand abzubremsen und eine dafür geeignete Vorrichtung zu schaffen.

Zur Lösung der Aufgabe ist vorgesehen, dass die Bremseinrichtung aus mindestens einem am Laufkran angeordneten, mit bis zur Höhe des Laufkrangewichtes gegen die Schienen preßbaren Bremsschuh besteht, der aus einer von der Schiene beabstandeten Ruhestellung kraftbetätigt in eine Bremsstellung bewegbar ist, in der der Bremsschuh bzw. die Bremsschuhe mit seiner der Schiene zugewandten Oberseite gegen die Schiene preßbar ist bzw. sind.

Mit dem Einsatz der neuartigen Vorrichtung entsteht eine Bremswirkung durch den energievernichtenden Aufbau einer Reibkraft, die auf die Schiene des Laufkranes wirkt. Da die Bremseinrichtung am Laufkran selbst angeordnet ist und gegen die Schienen preßbar ist, kann diese den Laufkran bis zum geringförmigen Abheben seiner Laufwerksrollen von den Schienen anheben, um somit extrem hohe Bremskräfte zu erzielen. Schon kurz nach Betätigen der Bremse ruht bei mehreren vorgesehenen Bremseinrichtungen das gesamte Gewicht des Laufkranes auf den Bremsschuhen und somit auf den Schienen. Überhaupt bietet es sich an, mehrere Bremsschuhe, vorzugsweise symmetrisch, am Laufkran anzuordnen, so dass beispielsweise an allen vier Ecken der Laufwerksträger Bremsschuhe vorgesehen sind.

In einer Ausgestaltung der Erfindung ist vorgesehen, dass jeder Bremsschuh vertikal im Fahrwerksrahmen des Laufkranes auf- und abbewegbar geführt ist. Die Vertikalführung stellt einerseits eine gute Führung der Bremsschuhe in senkrechter Richtung sicher und erlaubt eine Abstützung innerhalb der Führung auch in Querrichtung dazu. Sie ermöglicht darüber hinaus eine senkrechte Krafteinleitung der Bremsschuhe in die Schienen, wodurch in optimaler Weise die Krangewichtskraft zum Bremsen verwendet werden kann.

Als besonders günstig wird angesehen, wenn jeder Bremsschuh über einen Kniehebel oder Exzenter am Fahrwerksrahmen angelenkt ist. Exzenter und Kniehebel sind gut geeignet, bei kleinen Hubwegen große Kräfte zu übertragen, eine Bedingung, die bei der vorliegenden Bremseinrichtung gegeben ist.

Zum Beugen und Strecken des Kniehebels ist in einer weiteren Ausgestaltung der Erfindung ein Druckmittelzylinder einerseits an dem Kniehebel angelenkt, der sich andererseits am Rahmen des Laufkranes abstützt. Dieser Druckmittelzylinder wird erfindungsgemäß über einen im Verlauf des Fahrweges des Laufkranes angeordneten Anschlag oder Kontakt betätigt, d.h. sobald der Laufkran einen bestimmten Anschlag anfährt oder Kontakt überfährt, wird Druckmittel auf den Druckmittelzylinder freigegeben, so dass dieser - auf den Kniehebel wirkend - ein Ausfahren des Bremsschuhs gegen die Schiene bewirkt. Bei den hohen Bremskräften wird der Kran in einem kurzen Wegbereich zum Stillstand gebracht.

Vorzugsweise ist der Weg jedes Kniehebels durch Anschläge begrenzt, um eine Überstreckung des Kniehebels zu vermeiden.

Die neuartige Vorrichtung unterliegt keinen Witterungseinflüssen und kann, neben seiner eigentlichen Verwendung auch als Windsicherung zum Festhalten des Laufkranes auf dem Fahrweg verwendet werden. Auch als Radbruchstütze kann die Vorrichtung ebenso eingesetzt werden wie als Hilfsvorrichtung zum Wechseln von Laufrädern.

Ein Ausführungsbeispiel der Erfindung ist in der Zeichnung dargestellt und wird nachfolgend beschrieben. Es zeigt:
- Figur 1: die Seitenansicht eines Schienenlaufkranes mit Hydraulikpuffern,
- Figur 2: die Seitenansicht eines Schienenlaufkranes mit der erfindungsgemäßen Bremseinrichtung,
- Figur 3: eine Detailansicht aus Figur 2 mit deaktivierter Bremseinrichtung,
- Figur 4: einen Schnitt durch Figur 3 im Bereich der vertikalen Mittelachse des Fahrwerks,
- Figur 5: eine Detailansicht aus Figur 2 mit aktivierter Bremseinrichtung, und
- Figur 6: einen Schnitt durch Figur 5 im Bereich der vertikalen Mittelachse des Fahrwerks.

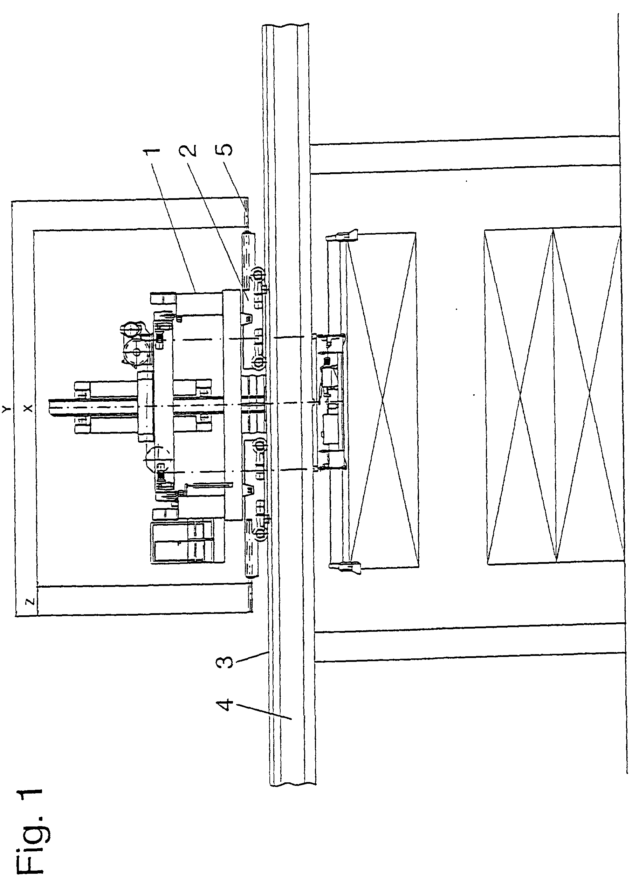

In Figur 1 ist ein konventioneller Laufkran 1 mit seinen Fahrwerken 2 auf der Schiene 3 der aufgeständerten Kranlaufbahn 4 verfahrbar dargestellt. Der Laufkran 1 besitzt herkömmliche standardisierte Hydraulikpuffer 5. Im ungepufferten Zustand ist Y die Laufkranlänge. Der Pufferweg beträgt einmal Z pro Seite, so dass bei beidseitig betätigten Puffern die Laufkranlänge X = Y - 2 ∗ Z ist.

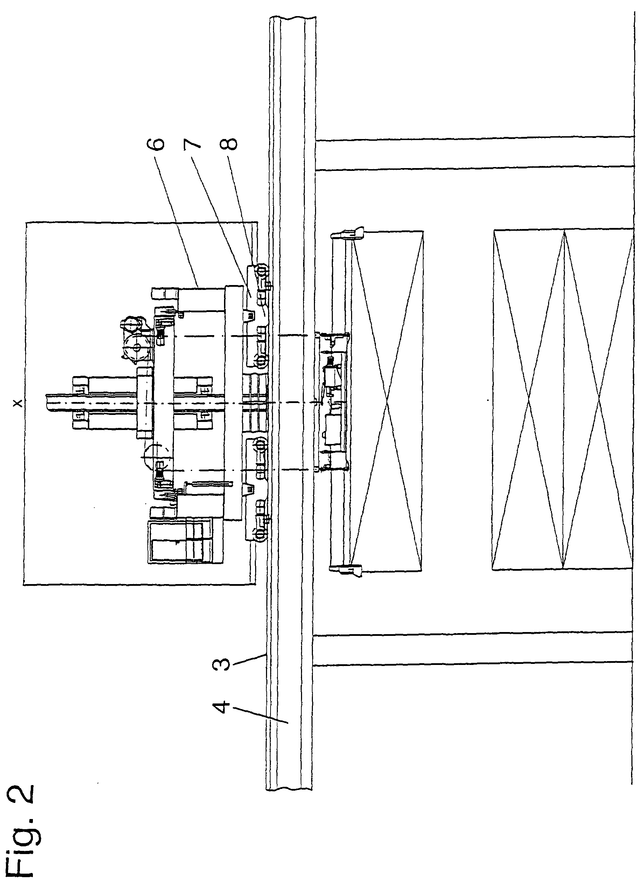

In Figur 2 ist der Schienenlaufkran mit 6 bezeichnet, er fährt mit seinen Fahrwerken 7 auf der Schiene 3 der aufgeständerten Kranlaufbahn 4 und wird mit der erfindungsgemäßen Bremseinrichtung 8 gebremst. Das Maß bis zu den mechanischen Anschlägen ist hier die Laufkranlänge X.

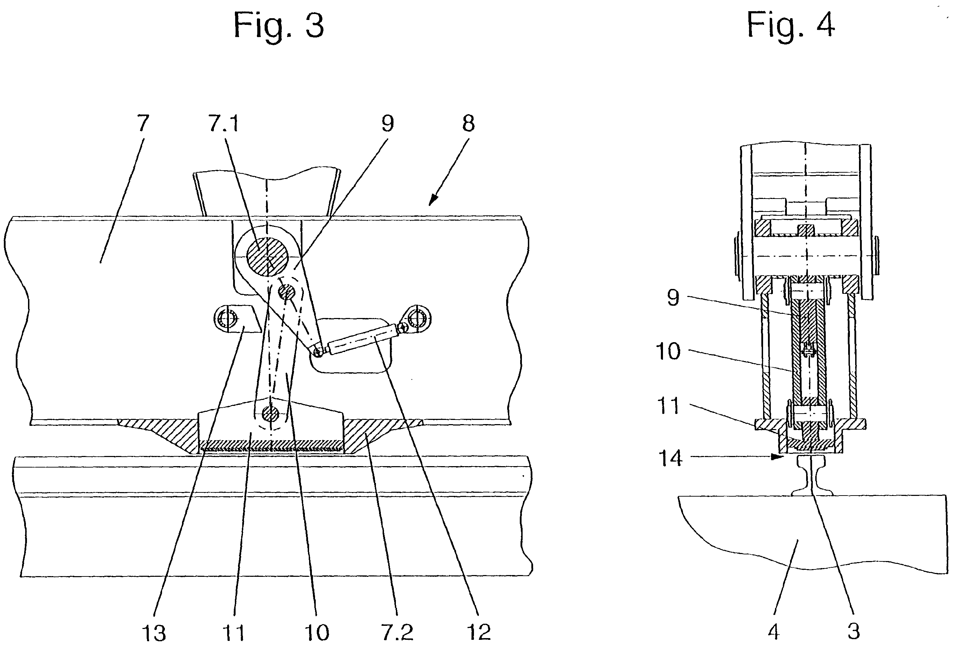

In Figur 3 erkennt man oberhalb der Schiene und der aufgeständerten Kranbahn 4 im Fahrwerk 7 die neuartige Bremseinrichtung 8, bestehend aus dem Kniehebel 9, der Koppelstange 10, dem Bremsschuh 11 und dem Hydraulikzylinder 12 sowie dem Endanschlag 13. Der Kniehebel 9 der Bremseinrichtung 8 schwenkt um die vordere Lagerachse 7.1 des Fahrwerkes 7. Der Bremsschuh 11 wird im Führungsschacht 7.2 vertikal geführt. Der Endanschlag 13 dient dem Hydraulikzylinder 12 als Hubbegrenzung und verhindert ein Übersteuern der Vorrichtung.

Die Bremseinrichtung 8 ist im deaktivierten Zustand, dem Betriebszustand des Laufkranes 6, dargestellt. Hierbei stellt sich zwischen Bremsschuh 11 und Schiene 3 ein ausreichend großer Abstand 14 ein.

Figur 4 zeigt in einem Schnitt durch die vertikale Mittelachse des Fahrwerkes 7 den Abstand zwischen dem Bremsschuh 11 und der Schiene 3, der sich im Betriebszustand einstellt und der mit 14 bezeichnet ist.

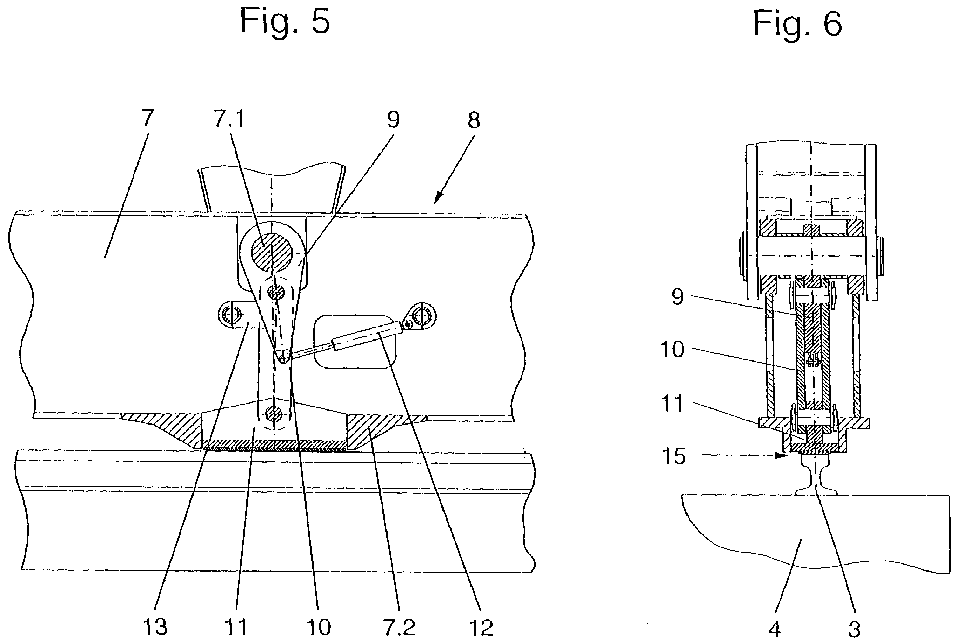

Auch in Figur 5 ist oberhalb der Schiene 3 und der aufgeständerten Kranlaufbahn 4 im Fahrwerk 7 die erfindungsgemäße Bremseinrichtung 8 dargestellt, die aus dem Kniehebel 9, der Koppelstange 10, dem Bremssschuh 11, dem Hydraulikzylinder 12 und dem Endanschlag 13 besteht. Der Kniehebel 9 der Bremseinrichtung 8 wurde mittels Hydraulikzylinder 12 um die Lagerachse 7.1 des Fahrwerks 7 bis zum Endanschlag 13 geschwenkt. Der Bremsschuh 11 wurde im Führungsschacht 7.2 vertikal in Richtung Schiene 3 verschoben. Die Bremseinrichtung 8 ist im aktivierten Zustand, dem Bremszustand des Laufkranes 6 dargestellt. Zwischen dem Bremsschuh 11 und der Schiene 3 hat sich der Reibkontakt 15 eingestellt, durch den der Kran bis zum Stillstand abgebremst wird. Dieser Zustand ist in Figur 6 ebenfalls zu erkennen, die den Schnitt durch die vertikale Mittelachse des Fahrwerkes 7 darstellt. Erkennbar stellt sich zwischen Bremsschuh 11 und der Schiene 3 der Reibkontakt 15 ein.

## Patentansprüche

1. Bremseinrichtung zur Begrenzung des Fahrweges eines auf Schienen verfahrbaren Laufkranes durch zeitweise Erhöhung dessen Fahrwiderstandes bis zum Stillstand,
**dadurch gekennzeichnet,**
**dass** die Bremseinrichtung aus mindestens einem am Laufkran (1) angeordneten, mit bis zur Höhe der Laufkrangewichtskraft gegen die Schienen (3) preßbaren Bremsschuh (11) besteht, der aus einer von der Schiene (3) beabstandeten Ruhestellung kraftbetätigt in eine Bremsstellung bewegbar ist, in der der Bremsschuh bzw. die Bremsschuhe (11) mit einer der Schiene (3) zugewandten Seite gegen die Schiene (3) preßbar ist bzw. sind.

2. Bremseinrichtung nach Anspruch 1,
**dadurch gekennzeichnet,**
**dass** jeder Bremsschuh (11) vertikal im Fahrwerksrahmen (2) des Laufkranes (1) auf- und abbewegbar geführt ist.

3. Bremseinrichtung nach Anspruch 1 und 2,
**dadurch gekennzeichnet,**
**dass** jeder Bremsschuh (11) über einen Kniehebel oder Exzenter (9) am Fahrwerksrahmen (2) angelenkt ist.

4. Bremseinrichtung nach Anspruch 3,
**dadurch gekennzeichnet,**
**dass** zum Beugen und Strecken des Kniehebels (9) ein Druckmittelzylinder (12) an dem Kniehebel (9) angreift.

5. Bremseinrichtung nach Anspruch 3 oder 4,
**dadurch gekennzeichnet,**
**dass** der Druckmittelzylinder (12) von einem im Verlauf des Fahrweges des Laufkranes (1) angeordneten Anschlag oder Kontakt betätigbar ist.

6. Bremseinrichtung nach Anspruch 3 bis 5,
**dadurch gekennzeichnet,**
**dass** der Weg jedes Kniehebels (9) durch Anschläge (13) begrenzt ist.
